Europäisches Patentamt

European Patent Office

Office européen des brevets

(1) Publication number: **0 170 255**
**B1**

(2) **EUROPEAN PATENT SPECIFICATION**

(45) Date of publication of patent specification: **13.09.89**

(51) Int. Cl.⁴: **C 08 F 297/08,** C 08 L 51/06, C 08 L 53/00

(21) Application number: **85109575.2**

(22) Date of filing: **30.07.85**

(54) **Impact-resistant polypropylene compositions having an improved whitening resistance.**

(30) Priority: **30.07.84 IT 2212084**

(43) Date of publication of application: **05.02.86 Bulletin 86/06**

(45) Publication of the grant of the patent: **13.09.89 Bulletin 89/37**

(84) Designated Contracting States: **AT BE DE FR GB IT NL**

(56) References cited: **US-A-4 415 718** **US-A-4 454 306**

(73) Proprietor: **Himont Incorporated** **2801 Centerville Road** **New Castle County Delaware (US)**

(72) Inventor: **Cecchin, Guiliano** **2, via Ugo Foscolo** **Ferrara (IT)** Inventor: **Guglielmi, Floriano** **33, Via M. Azzi** **Ferrara (IT)**

(74) Representative: **Zumstein, Fritz jun., Dr. et al** **Dr. F. Zumstein sen. Dr. E. Assmann Dr. R. Koenigsberger Dipl.-Ing. F. Klingseisen Dr. F. Zumstein jun. Bräuhausstrasse 4** **D-8000 München 2 (DE)**

The file contains technical information submitted after the application was filed and not included in this specification

Courier Press, Leamington Spa, England.

# EP 0 170 255 B1

**Description**

This invention relates to polypropylene compositions having improved impact resistance and whitening resistance characteristics.

As is known, the isotactic polypropylene, though being endowed with an exceptional combination of excellent properties, is affected by the drawback of possessing an insufficient impact resistance at relatively low temperatures.

According to the teachings of the prior art, it is possible to obviate this drawback, without sensibly affecting the other polymer properties, by properly modifying the synthesis process or by blending with rubbers.

The modifications to the synthesis process essentially consist in introducing, after the homopolymerization step of propylene to isotactic polymer, one or more steps for the copolymerization of ethylene and propylene mixtures.

Processes and compositions which are representative of the prior art are described in US Patents 3,629,368; 3,670,368; 3,670,053; 3,200,173 and in European Patent Application 0077532.

According to US Patent 4,454,306 olefinic block copolymers having well-balanced flexibility, strength and processability can be prepared in the presence of a stereospecific catalyst, by combining a polymerization step of propylene with a polymerization step of ethylene and at least one $C_{3-12}$ α-olefin.

These block copolymers which contain a relatively high amount of rubbery fraction are particularly suitable for obtaining products falling in the field of thermoplastic elastomers by partially crosslinking said rubbery fraction.

The impact resistance characteristics at low temperatures of the isotactic polypropylene can be improved by adding a rubber thereto, in particular an ethylene-propylene rubber (see for example US Patent 3,627,852).

The products thus obtained are characterized by an excellent balance of properties, in particular a high rigidity and resistance to impact even at relatively low temperatures. Such materials, however, though being particularly suitable for the manufacture of injection molded articles, exhibited a particularly serious drawback, as regards—the aesthetical characteristics of—the manufactured articles. These products, in fact, are characterized by a low resistance to whitening if subjected to impact. Such phenomenon appears in the form of a whitish spot that forms around the impact-concerned area.

To obviate such drawback it was suggested to mix specific propylene-ethylene copolymers, prepared in two steps, with specific types of polyethylene (see for example US. Patent 4,312,964).

It is apparent, however, that the achievement of such purpose involves, in addition to the two synthesis process steps, a further step consisting in mixing the obtained polymer with the polyethylene.

That represents a considerable drawback as regards both the economics and the simplicity of the process.

It has now surprisingly been found that it is possible to obtain polypropylene compositions simultaneously endowed with a high rigidity, a high impact resistance and a high whitening resistance by operating in two steps, in the first step occurring the homopolymerization of propylene to stereoregular polymer and in the second step the copolymerization of ethylene/butene-1 mixtures.

On the basis of the prior art it could not be expected that the substitution of the propylene-ethylene rubber by the ethylene-butene-1 rubber would permit to obtain modified polypropylenes endowed with an improved whitening resistance.

Thus, the object of the present invention consists of:

Polypropylene compositions having a high impact resistance at low temperatures and an improved whitening resistance, comprising, as essential components:

60—90 parts by weight of polypropylene with an isotacticity index >90, preferably >95;

10—40 parts by weight of an ethylene-butene-1 copolymeric fraction containing 50—95% by weight of ethylene and having 20—95% by weight of a crystalline fraction (I), with a polyethylene-type crystallinity, insoluble in xylene at room temperature, and 5—80% by weight of an amorphous copolymeric fraction (II), soluble in xylene at 23°C, containing 40—70% by weight of ethylene, and wherein the weight ratio between the total polymerized ethylene and fraction II ranges from 0.6 to 8.

The compositions are obtained by means of copolymerization processes comprising at least a homopolymerization step of propylene to stereoregular polymer and a subsequent copolymerization step of ethylene-butene-1 mixtures in the presence of Ziegler-Natta stereospecific catalysts prepared in particular from a titanium compound carried on a magnesium halide in the activated form.

The polymerization processes are conducted continuously or discontinuously according to conventional techniques by operating in the liquid phase either or not in the presence of an inert diluent, or in the gas phase or according to mixed liquid-gas techniques.

Particularly advantageous has proved the use of catalysts with a spheric morphology and a narrow particle size distribution in mixed polymerization processes, in which the homopolymerization of propylene is accomplished in a liquid monomer and the copolymerization of ethylene-butene-1 is accomplished in the gas phase.

Between the two steps, the reactor is degassed in order to get a substantially complete removal of

2

residual propylene. "Substantial removal" means residual concentrations of propylene in the gas phase below 5% by mols with respect to the other monomers.

The physical-mechanical properties of the claimed compositions essentially depend on the amount and quality of the copolymer.

The total polymerized ethylene content ranges from 5 to 30% by weight and the total polymerized butene-1 content ranges from 2 to 15% by weight.

The molecular weight of the various components, determined by measuring the inherent viscosity in tetrahydronaphthalene at 135°C varies, as a function of the components' nature, within the following limits:

1—4.5 dl/g for polypropylene;   2—15 dl/g for fraction I, and   1.5—10 dl/g for fraction II.

The mechanical properties being the same, the compositions herein described, based on an ethylene-butene-1 copolymeric phase, exhibit a surprising improvement in the whitening resistance as compared with the compositions based on ethylene-propylene copolymers.

Amount and composition of the ethylene-butene-1 copolymer are not critical as regards said characteristic, the latter depending on the M.F.R. of the product, especially below 1 g/10'.

In any case the stress-whitening resistance values are constantly better than those of the corresponding compositions based on ethylene-propylene copolymeric fractions, the other physical-mechanical properties being equal.

Table I and Table II respectively show the characteristics of the two steps of the process as well as the characteristics of the products obtained. The latter characteristics vary according to the variation in the amount and composition of the ethylene-butene-1 copolymer.

The resistance to whitening is determined by subjecting the impact, caused by a ram having a preestablished weight, small discs prepared from the polymer being tested. Both the minimum height necessary to obtain the whitening (h), and the width of the whitening area at the maximum height allowed by the apparatus ($\phi$) are determined.

The following examples are given to illustrate the invention, without being however, a limitation thereof.

Example
General operative modalities

The tests were carried out in a stainless steel 22-1 autoclave, equipped with a helical magnetic stirrer running at about 90 rpm.

Temperature and pressure were kept constant.

The gas phase was continuously analyzed by means of a process gaschromatograph.

It was operated discontinuously in two steps: in the first step, propylene was homopolymerized in liquid monomer, while in the second step ethylene and butene-1 (or propylene, in the comparative tests) were copolymerized in the gas phase.

A) 1st step:

Into the autoclave at 20°C there were introduced, in the order:

16 l of liquid propylene and the catalyst complex, consisting of a solid component (prepared according to Example 20 of European Patent Application 0045977) and of a mixture of 75 ml of Al-triethyl (TEAL) at 10% in hexane and of 1 g of diphenyl-dimethoxysilane (DPMS). The TEAL concentration is not critical and may be varied in the range from 0.1 to 5 g/l $C_3$. The molar ration between TEAL and DPMS may range from 0.5 to 100, preferably from 2 to 40.

Optionally, the catalyst can be prepolymerized, before being introduced into the reactor, with a small propylene amount. The ratio between prepolymerized propylene and solid catalyst component generally ranges from 0.5 to 1000, preferably from 1 to 100.

Such complex was fed by means of propylene pressure. The temperature was brought to 70°C in about 10 minutes and was kept constant allthrough the polymerization. Hydrogen was continuously analyzed in the gas phase and was fed in such a way as to keep constant the desired concentration thereof. After a prefixed time, substantially all the residual monomer was removed by degassing at 60°C and at atmospheric pressure.

B) 2nd step:

The homopolymer powder, after drawing of a sample for the isotacticity index (I.I.) determination, was brought to 60°C. Subsequently, there were fed, in the order, butene-1 (propylene in the comparative tests) and ethylene in the amount and ratio necessary to obtain the composition of the gas phase and the pressure prefixed (such amounts will be referred to as fed butene and fed ethylene, respectively).

During the polymerization the pressure was kept constant by feeding an ethylene/butene-1 mixture (or an ethylene/propylene mixture, in the comparative examples) having the same composition of the copolymer to be obtained and contained in a thermoregulated cylinder at 60°C.

The feeding time depends on the reactivity of the catalytic system and on the copolymer amount required to provide the relative composition to be obtained between homopolymer and copolymer.

At the end of the test, the powder was discharged, stabilized with Irganox® B230 (0.06%), GMS (0.08%) and SHT (0.12%), dried in an oven in a nitrogen stream at 60°C and granulated.

All the tests carried out and the relevant operative conditions are recorded in the Tables.

TABLE I

| | | Unit No. | 1 | 1C | 2 | 2C | 3 | 3C | 4 | 4C |
|---|---|---|---|---|---|---|---|---|---|---|
| **Example** | | | | | | | | | | |
| 1st step (homopolymer) | Temperature | °C | 70 | 70 | 70 | 70 | 70 | 70 | 70 | 70 |
| | Pressure | kg/cm² g. | 30.2 | 30.3 | 30.2 | 30.2 | 30.2 | 30.4 | 30.4 | 30.3 |
| | Time | minutes | 120 | 120 | 120 | 120 | 120 | 120 | 120 | 120 |
| | Hydrogen | % moles | 0.34 | 0.6 | 0.36 | 0.4 | 0.4 | 0.8 | 0.8 | 0.6 |
| | Catalyst | mg | 103 | 120 | 86 | 113 | 100 | 119 | 114 | 114 |
| | I.I. | % | 95 | 97.2 | 97 | 97.8 | 96 | 98.2 | 98 | 97.2 |
| 2nd step (bipolymer) | Temperature | °C | 60 | 60 | 60 | 60 | 60 | 60 | 60 | 60 |
| | Pressure | kg/cm² g. | 6.5 | 7.6 | 7.4 | 7.6 | 7.7 | 8.4 | 7.6 | 10.1 |
| | Time | minutes | 130 | 110 | 160 | 90 | 100 | 160 | 130 | 55 |
| | Hydrogen | % moles | 0.3 | 0.1 | 0.3 | 0.2 | 0.5 | 0.2 | 0.2 | 0.1 |
| | Fed ethylene | g | 50 | 66 | 67 | 66 | 91 | 100 | 126 | 168 |
| | Fed propylene | g | — | 150 | — | 150 | — | 117 | — | 54 |
| | Fed butene | g | 200 | — | 200 | — | 156 | — | 56 | — |
| | Ethylene/propylene (fed monomers) | g/g | — | 57/43 | — | 57/43 | — | 75/25 | — | 88/12 |
| | Ethylene/butene (fed monomers) | g/g | 51/49 | — | 54/46 | — | 70/30 | — | 88/12 | — |
| | Ethylene (gas phase) | % mol | 30 | 38 | 34 | 43 | 45 | 59 | 78 | 81 |
| | Total polymer | Kg | 4.2 | 5.63 | 3.64 | 4.7 | 3.6 | 4.3 | 4.26 | 3.2 |

TABLE II

| Example | Unit No. | 1 | 1C | 2 | 2C | 3 | 3C | 4 | 4C |
|---|---|---|---|---|---|---|---|---|---|
| Total ethylene | % b.w. | 11.1 | 11.3 | 13.5 | 13.4 | 15.9 | 17.8 | 19.1 | 19.3 |
| Total butene | % b.w. | 10.5 | — | 11.5 | — | 7.1 | — | 2.6 | — |
| Solublity in xylene | % b.w. | 15.6 | 16.9 | 16.4 | 15.5 | 12.4 | 12.3 | 3.9 | 4.2 |
| $[\eta]$ Sol. in xylene | dl/g | 2.41 | 2.56 | 2.54 | 2.2 | 2.66 | 2.84 | 2.05 | 2.4 |
| Melt index L | g/10′ | 3.7 | 3.4 | 2.2 | 2.9 | 2.7 | 3.6 | 2.35 | 2.1 |
| Flexural elastic modulus | MPa | 1080 | 1010 | 860 | 1070 | 1160 | 1020 | 1300 | 1280 |
| Trans. brittle/ductile | °C | −44 | −48 | −49 | −52 | −55 | −46 | −47 | −48 |
| Resilience IZOD C.I.+23°C | J/m | 207 | 579 | 772 | 177 | 182 | 148 | 114 | 95 |
| HDT (46 IV cm²) | °C | 70 | 68 | 70 | 75 | 78 | 76 | 81 | 76 |
| (Impact whitening) ⌐h | cm | 25 | 8.5 | 40 | 8.5 | 20 | 7.0 | 25 | 14 |
| ⌐φ | cm | 0.5 | 1.05 | 0.3 | 1.05 | 0.8 | 1.35 | 0.35 | 0.5 |

1, 2, 3, 4C=Comparative tests

EP 0 170 255 B1

**Claims**

1. Polypropylene compositions having a high impact resistance at low temperatures and an improved whitening resistance, comprising, as essential components:

60—90 parts by weight of polypropylene having an isotacticity index >90, preferably >95;

10—40 parts by weight of an ethylene/butene-1 polymeric fraction containing 50—95% by weight of ethylene and consisting of 20—95% by weight of a crystalline fraction (I), with a polyethylene-type crystallinity, insoluble in xylene at room temperature, and for 5—80% by weight of an amorphous fraction (II), soluble in xylene at 23°C, containing 40—70% by weight of ethylene, and in which the weight ratio between total polymerized ethylene and fraction II ranges from 0.6 to 8.

2. A process for preparing the composition according to Claim 1, by polymerization of propylene and of ethylene/butene-1 mixtures accomplished in subsequent steps comprising at least a step for the stereoregular homopolymerization of propylene and a step for the copolymerization of mixtures of ethylene and of butene-1, characterized in that the polymerization is carried out in the presence of stereospecific coordination catalysts comprising a titanium compound carried on a magnesium halide in the active form having a surface area greater than 3 m²/g and/or having a X-ray spectrum in which the line of higher intensity appearing in the spectrum of the non-activated magnesium halide is broadened or replaced by a halo, by operating in such conditions as to permit the formation, in the homopolymerization step, of polypropylene with an isotacticity index higher than 90, in an amount by weight ranging from 60 to 90 of the final product, and the formation, in the copolymerization step, of an amorphous ethylene/butene-1 copolymer extractable with xylene at 23°C, in such amounts that the weight ratio between total polymerized ethylene and amorphous copolymer may range from 0.6 to 8.

3. The process according to Claim 2, in which the propylene homopolymerization is accomplished in liquid monomer and the ethylene/butene-1 copolymerization is effected in the gas phase.

**Patentansprüche**

1. Polypropylenzusammensetzungen mit hoher Schlagzähigkeit bei niedrigen Temperaturen und verbesserter Beständigkeit gegenüber Weißtrübung, die als wesentliche Komponenten enthalten:

60—90 Gewichtsteile Polypropylen mit einem Isotaktizitäts- index >90, vorzugsweise >95;

10—40 Gewichtsteil einer Ethylen/Buten-1-Polymerisat-Fraktion, die 50—95 Gew.-% Ethylen enthält und zu 20—95 Gew.-% aus einer kristallinen Fraktion (I) mit einer Kristallinität von Polyethylen-Typ besteht und in Xylol bei Raumtemperatur unlöslich ist, und zu 5 bis 80 Gew.-% aus einer amorphen Fraktion (II), die bei 23°C in Xylol löslich ist und 40—70 Gew.-% Ethylen enthält, besteht; und bei denen das Gewichtsverhältnis zwischen dem gesamten polymerisierten Ethylen und der Fraktion (II) im Bereich von 0,6 bis 8 liegt.

2. Verfahren zur Herstellung der Zusammensetzungen gemäß Anspruch 1 durch Polymerisation von Propylen und von Ethylen/Buten-1-Mischungen in aufeinanderfolgenden Stufen, umfassend zumindest eine Stufe für die stereoreguläre Homopolymerisation von Propylen und eine Stufe für die Copolymerisation von Mischungen von Ethylen und Buten-1, dadurch gekennzeichnet, daß die Polymerisation in Gegenwart von stereospezifischen Koordinationskatalysatoren, umfassend ein Titanverbindung, aufgebracht auf ein Magnesiumhalogenid in aktiver Form mit einer spezifischen Oberfläche von höher als 3 m²/g und/oder mit einem Röntgenbeugungsspektrum, bei dem die in dem Spektrum des nicht-aktivierten Magnesiumhalogenids erscheidende Linie mit höherer Intensität verbreitert oder durch einen Halo bzw. Hof ersetzt ist, durchgeführt wird, wobei man unter derartigen Bedingungen arbeitet, daß bei der Homopolymerisationsstufe die Bildung von Polypropylen mit einem Isotaktizitätsindex von höher als 90 in einer auf das Gewicht bezogenen Menge von 60—90 des Endprodukts und bei der Copolymerisationsstufe die Bildung eines amorphen Ethylen/Buten-1-Copolymeren, das bei 23°C mit Xylol extrahierbar ist, in derartigen Mengen erfolgen kann, daß das Gewichtsverhältnis zwischen gesamtem polymerisierten Ethylen und amorphen Copolymeren im Bereich von 0,6 bis 8 liegen kann.

3. Verfahren gemäß Anspruch 2, dadurch gekennzeichnet, daß die Propylen-Homopolymerisation in flüssigem Monomeren erfolgt, und die Ethylen/Buten-1-Copolymerisation in der Gasphase durchgeführt wird.

**Revendications**

1. Compositions de polypropylène présentant une résistance aux chocs élevée aux basses températures et une résistance au blanchiment améliorée comprenant, en tant que constituants essentiels:

60 à 90% en poids de polypropylène présentant un indice d'isotacticité >90 et, de préférence >95;

10 à 40 parties en poids d'une fraction polymère éthylène/butène-1 contenant 50 à 95% en poids d'éthylène et formée de 20 à 95% en poids d'une fraction cristalline (I) présentant une cristallinité de type polyéthylènique, insoluble dans le xylène à température ambiante et de 5 à 80% en poids d'une fraction amorphe (II), soluble dans le xylène à 23°C et contenant 40 à 70% d'éthylène; et dans laquelle le rapport molaire éthylène polymérisé total/fraction (II) est compris entre 0,6 et 8.

EP 0 170 255 B1

2. Un procédé de préparation des compositions selon la revendication 1, par polymérisation de propylène et de mélanges éthylène/butène-1, effectuée en étapes successives, comprenant au moins une étape d'homopolymérisation stéréorégulière du propylène et une étape de copolymérisation de mélanges d'éthylène et de butène-1, caractérisé en ce que la polymérisation est effectuée en présence de catalyseurs de coordination stéréospécifiques comprenant un composant à base de titane supporté sur une halogénure de magnésium sous forme active, présentant une surface superficielle supérieure à 3 m²/g et/ou présentant un spectre aux rayons-X dans lequel la raie d'intensité maximum se produisant dans le spectre de l'halogénure de magnésium non activé est élargi remplacé par un halo, en opérant dans des conditions telles que l'on permette la formation, au cours de l'étape d'homopolymérisation, de polypropylène présentant un indice d'isotacticité >90 en une proportion pondérale comprise entre 60 et 90% du produit final et la formation, dans l'étape de copolymérisation, d'un copolymère éthylène/butène-1 amorphe susceptible d'être extrait par l'éthylène à 23°C en quantité telle que le rapport pondéral éthylène polymérise total/copolymère amorphe soit compris entre 0,6 et 8.

3. Le procédé selon la revendication 2, dans lequel l'homopolymérisation du propylène est effectuée dans un monomère liquide et la copolymérisation éthylène/butène-1 est effectuée en phase gazeuse.

7